# EUROPÄISCHE PATENTANMELDUNG

(11) **EP 4 339 364 A2**
(43) Veröffentlichungstag der Anmeldung: **20.03.2024**
(21) Anmeldenummer: 23175928.3
(22) Anmeldetag: 30.05.2023
(51) Int. Cl.: D21J 3/00

(54) **VERFAHREN ZUM HERSTELLEN EINES FASERN UMFASSENDEN BEHÄLTERS UND VORRICHTUNG**

(30) Priorität: 25.08.2022 DE 102022121459
(71) Anmelder: Krones AG, 93073 Neutraubling (DE)
(72) Erfinder: WINZINGER, Frank, 93073 Neutraubling (DE); GROSSER, Angelika, 93073 Neutraubling (DE); WEIN, Barbara, 93073 Neutraubling (DE)
(74) Vertreter: Grünecker Patent- und Rechtsanwälte PartG mbB

(57) **Zusammenfassung**

Die Erfindung betrifft ein Verfahren zum Herstellen eines Fasern umfassenden Behälters (1, 9, 16, 26) mittels eines gesteuerten Auftragskopfes, der Material, das die Fasern umfasst, an Behälterpositionen aufbringt. Weiter betrifft die Erfindung eine Vorrichtung, beispielsweise zum Ausführen des Verfahrens, wobei die Vorrichtung mindestens einen gesteuerten Auftragskopf umfasst zum Aufbringen von Material, das die Fasern umfasst, an Behälterpositionen.

## Beschreibung

Die Erfindung betrifft ein Verfahren zum Herstellen eines Behälters und eine Vorrichtung, beispielsweise zum Ausführen des Verfahrens, gemäß den unabhängigen Ansprüchen.

### Stand der Technik

Bekannt ist bisher, bei Behälterkörpern, die aus Pulpe mittels Gussverfahren hergestellt werden, einen aus Kunststoff geformten Gewindebereich zu verwenden und diesen an den gegossenen Behälterkörper anzukleben. Das Ankleben des Gewindebereichs an den gegossenen Behälterkörper kann hinsichtlich Dichtigkeit, Barrierewirkung und Festigkeit problematisch sein.

### Aufgabe

Die Aufgabe der Erfindung ist es, ein Verfahren zum Herstellen eines Fasern umfassenden Behälters und eine Vorrichtung, beispielsweise zum Ausführen des Verfahrens, zur Verfügung zu stellen, die ein Herstellen eines Behälters ermöglichen, der eine ausreichende Dichtigkeit, Barrierewirkung und Festigkeit aufweist.

### Lösung

Die Aufgabe wird gelöst durch Verfahren zum Herstellen eines Behälters und eine Vorrichtung, beispielsweise zum Ausführen des Verfahrens gemäß den unabhängigen Ansprüchen. Weitere Ausführungsformen sind in den Unteransprüchen offenbart.

Das erfindungsgemäße Verfahren ist zum Herstellen eines Fasern umfassenden Behälters mittels eines gesteuerten Auftragskopfes, der Material, das die Fasern umfasst, an Behälterpositionen aufbringt.

Durch die Herstellung eines Behälters, der ein Material mit Fasern umfasst, mittels eines gesteuerten Auftragskopfs können die Fasern, beispielsweise Papierfasern, trocken oder feucht oder als Pulpe an den Behälterpositionen aufgebracht werden, an denen sich beim hergestellten Behälter Material befinden soll.

Beispielsweise können so Klebe- und/oder Verbindungsstellen zwischen Behälterteilen vermieden werden, die beispielsweise in unterschiedlichen Herstellungsverfahren hergestellt wurden, wobei unterschiedlich zu verschiedenen Zeiten und/oder mit verschiedenen Verfahrensarten umfassen kann. Durch das Vermeiden von Klebe- und/oder Verbindungsstellen zwischen Behälterteilen können Probleme vermieden werden, die Dichtigkeit, Barrierewirkung und/oder Feuchtigkeit betreffen können.

Es kann sein, dass Klebe- und/oder Verbindungsstellen gänzlich vermieden werden. So kann der Behälter mittels des Auftragskopfs größtenteils fertiggestellt, mit einem Produkt befüllt und anschließend durch denselben oder einen anderen Auftragskopf verschlossen werden.

Alternativ ist es möglich, dass nach dem Herstellen eines oben offenen Behälters durch den Auftragskopf und einer Befüllung des Behälters mit Produkt, ein zuvor hergestellter Verschluss auf den Behälter aufgebracht werden kann, beispielsweise mittels Aufschrauben.

Ebenso umfasst sein kann ein Herstellen eines oben offenen Behälters mittels einer Form und das Verschließen des Behälters mittels des Auftragskopfes.

Das Material kann mittels des gesteuerten Auftragskopfs auf einer Innenwandung einer Form aufgebracht werden und ein Herstellen des Behälters kann durch Pressen oder Ausformen mittels eines Ballons in der Form erfolgen.

Ein Aufbringen des Materials kann mittels eines 3D-Druckers erfolgen, wobei beispielsweise für das Aufbringen ein schichtweiser Aufbau vorgesehen sein kann. Durch die Verwendung des 3D-Druckers kann der Wassergehalt des Materials, das die Fasern umfasst, beispielsweise kleiner gewählt werden als beim Aufbringen des Material mittels des gesteuerten Auftragskopfs auf einer Innenwandung einer Form. So kann bei Verfahren mit 3D-Drucker die Trocknungsphase des hergestellten Behälters kürzer sein.

Durch eine Gleichschaltung einer Vielzahl von Düsen des 3D-Druckers kann eine Vielzahl von Behältern gleichzeitig hergestellt werden. Beispielsweise können alle der Vielzahl von Düsen durch einen gemeinsamen Antrieb bewegt werden.

Eine Bewegung des gesteuerten Auftragskopfs kann mittels eines Mehrachsroboters erfolgen. Der Mehrachsroboter kann einen 3-, 4-, 5-, 6- oder 7-Achs-Roboter umfassen, beispielsweise einen 3-, 4-, 5-, 6- oder 7-Achs-Knickarmroboter.

Mittels des gesteuerten Auftragskopfs kann das Material auf einen bereits zumindest teilweise hergestellten Behälter aufgebracht werden zum weiteren Herstellen eines Teilelements des Behälters und gleichzeitigem Verbinden des Teilelements mit dem bereits zumindest teilweise hergestellten Behälter. Beispielsweise kann das Teilelement ein Mundstück und/oder einen Griff und/oder ein Gewinde umfassen. Beispielsweise kann anschließend an das Herstellen des Gewindes ein Pressen des Gewindes erfolgen.

Mittels dem gesteuerten Auftragskopf kann mindestens ein weiteres, faserhaltiges Material an Behälterpositionen aufgebracht werden, wobei das mindestens eine weitere, faserhaltige Material verschieden von dem Material sein kann, das die Fasern umfasst.

Beispielsweise kann für ein Gewinde oder einen Gewindebereich ein weiteres, faserhaltiges Material verwendet werden, das nach der Herstellung des Behälters ein Gewinde oder einen Gewindebereich bedingt, das/der eine höhere Stabilität als der Rest des Behälters aufweist.

Mittels des gesteuerten Auftragskopfs können Identifikationsangaben und/oder Haltbarkeitsangaben als Embossing auf dem Behälter aufgebracht werden.

Am Auftragskopf oder separat kann ein Presswerkzeug angeordnet sein, mit welchem die soeben aufgetragene Masse schrittweise nach einem Auftragen gepresst bzw. zusammengedrückt werden kann. Das Presswerkzeug kann beispielsweise zwei gegenüberliegende Platten umfassen, die jeweils kleiner sein können als 5 cm², beispielsweise kleiner als 1 cm² und das aufgetragene Material zusammenpressen können.

Das Presswerkzeug kann beispielsweise zumindest bereichsweise um den Auftragskopf angeordnet sein.

Weiterhin kann eine Trocknungseinrichtung zum Trocknen des Materials an der Vorrichtung angeordnet sein.

Die Trocknungseinrichtung kann ein Gebläse umfassen.

Die Trocknungseinrichtung und/oder das Presswerkzeug können am Auftragskopf angeordnet sein oder durch eigene Antriebe entlang der Kontur des Behälters verfahren werden.

Innerhalb des Behälters kann mindestens eine Stütze vorgesehen werden, die beispielsweise zwei oder mehr Innenbereiche des Behälters verbinden kann. Bei einem derartigen Behälter kann es sich um eine unabhängige Erfindung handeln.

Durch das Vorsehen der mindestens einen Stütze kann der Behälter beispielsweise dünnere Wandstärken aufweisen als ein entsprechender Behälter ohne die mindestens eine Stütze.

Innerhalb des Behälters kann bedeuten, dass die mindestens eine Stütze beim Herstellen des Behälters mittels des gesteuerten Auftragskopfes, der Material, das die Fasern umfasst, an Behälterpositionen aufbringt, von dem Material umgeben wird. Die mindestens eine Stütze kann in dem Material, das die Fasern umfasst, eingebettet sein.

Beispielsweise können ein Bodenbereich und ein Schulterbereich oder ein Bodenbereich und ein Seitenteilbereich mittels der mindestens einen Stütze verbunden werden. Durch das Vorsehen der mindestens einen Stütze kann der Behälter beispielsweise eine dünnere Bodendicke aufweisen als ein entsprechender Behälter ohne die mindestens eine Stütze. Die mindestens eine Stütze kann schräg verlaufend angeordnet sein.

Beispielsweise kann die mindestens eine Stütze umlaufend einen Seitenteilbereich und einen Schulterbereich verbinden. Die mindestens eine Stütze kann horizontal verlaufend ausgebildet sein. Sie kann für eine Druckbeständigkeit des Behälters bei Füllung mit einem kohlenstoffdioxidhaltigen Produkt dienen. Sie kann auch oder alternativ für eine zusätzliche Stabilität beim Einwirken eines Staudrucks auf den Behälter beim Transport auf einem Transporteur dienen.

Beispielsweise kann die mindestens eine Stütze umlaufend ein Seitenteilbereich und einen Bodenbereich verbinden. Die mindestens eine Stütze kann horizontal verlaufend ausgebildet sein. Sie kann für eine Druckbeständigkeit des Behälters bei Füllung mit einem kohlenstoffdioxidhaltigen Produkt dienen.

Die Stützen können ein Zugband für einen Boden des Behälters und/oder mindestens ein horizontal umlaufendes Zugband und/oder mindestens ein schräg verlaufendes Zugband umfassen. Beispielsweise können diese Zugbänder langfaseriges Material umfassen.

Ein schräg verlaufendes Zugband, das den Boden und einen Seitenteilbereich verbindet, ein nach Außenwölben des Bodens verhindern, wenn beispielsweise kohlenstoffdioxidhaltiges Produkt in den hergestellten Behälter eingefüllt wird.

Beispielsweise können eine Mitte des Bodenbereichs und ein Schulterbereich oder eine Mitte des Bodenbereichs und ein Seitenteilbereich mittels der mindestens einen Stütze verbunden werden.

Die Stütze kann als Zugband fungieren, welches einer Ausdehnung des Bodenbereichs, bzw. der Mitte des Bodenbereichs weg vom Zentrum (normalerweise bei auf dem Boden stehenden Behälter nach unten in Richtung Erdmittelpunkt) des Behälters entgegenwirkt.

Ein Boden des Behälters kann mehrere Segmente umfassen, beispielsweise Kreissegmente. Eine Bodendicke des Segments kann kleiner sein als eine Bodendicke einer Trennwand der Segmente. Beispielsweise kann die Standfestigkeit eines hergestellten Behälters dadurch erhöht werden.

Eine Trennwand der Segmente kann Eigenschaften wie ein Zugband umfassen.

Ein Innenbereich des Behälters kann mittels des gesteuerten Auftragskopfs strömungsoptimiert ausgebildet werden. Beispielsweise kann ein Füllprozess des Behälters mit Produkt erleichtert werden hinsichtlich Produkteinlaufs. Der Innenbereich kann eine innere Oberfläche des Behälters umfassen.

Mittels eines 3D-Druckers kann eine Beschichtung auf eine innere Oberfläche, auch als Innenschicht bezeichnet, und/oder äußere Oberfläche des hergestellten Behälters aufgebracht werden. Beispielsweise kann die Beschichtung eine Nanoschicht umfassen. Es können zwei Innenschichten vorgesehen sein, wobei die Nanoschicht die innere Schicht der Innenschichten darstellen kann. Die Nanoschicht kann Siliziumatome umfassen.

Eine Beschichtung auf der inneren Oberfläche kann einen Durchtritt von einem in den Behälter gefülltem Produkt durch das Material, das die Fasern umfasst, verhindem.

Eine Beschichtung kann auf eine äußere Oberfläche des hergestellten Behälters durch Eintauchen in ein Beschichtungsbad erfolgen. Beispielsweise kann die Beschichtung ein Harz umfassen. Durch eine Beschichtung der äußeren Oberfläche kann der Behälter zusätzlich vor äußeren Einflüssen geschützt werden.

Die Vorrichtung kann mindestens einen gesteuerten Auftragskopf umfassen zum Aufbringen von Material, das die Fasern umfasst, an Behälterpositionen.

Die Vorrichtung kann weiter einen 3D-Drucker umfassen. Der 3D-Drucker kann eine Vielzahl von Düsen umfassen, mit denen beispielsweise eine Vielzahl von Behältern gleichzeitig hergestellt werden können. Beispielsweise können alle der Vielzahl von Düsen durch einen gemeinsamen Antrieb bewegt werden.

Die Vorrichtung kann weiter einen Mehrachsroboter umfassen für ein Bewegen des mindestens einen gesteuerten Auftragskopfs. Beispielsweise kann der Mehrachsroboter einen hydraulischen, pneumatischen, elektromechanischen oder hydropneumatischen Aktor umfassen.

Die Vorrichtung kann ein Mischbehältnis zum Mischen von Fasern mit anderen Bestandteilen, beispielsweise einer Flüssigkeit, beispielsweise Wasser, umfassen, und beispielsweise eine Zuführleitung von dem Mischbehältnis zu dem Auftragskopf. Entlang der Zuführleitung kann eine Pumpe angeordnet sein.

Die Vorrichtung kann weiterhin einen Füller zum Abfüllen eines Getränks in den Behälter umfassen.

Die Vorrichtung kann eine Etikettiermaschine zum Etikettieren des Behälters mit einem Etikett und/oder einen Drucker zum Bedrucken des Behälters mit Tinte oder Farbe oder dgl. umfassen.

Die Vorrichtung kann weiterhin einen Packer zum Verpacken des Behälters mit weiteren Behältern umfassen, beispielsweise zu Packs.

Die Vorrichtung kann weiterhin einen Palettierer zum Palettieren von Behältern oder von den Packs umfassen.

Die Vorrichtung kann ein Transportsystem umfassen, welches die Behälter von dem Auftragskopf zu einem oder mehreren der genannten Füller, Etikettiermaschine, Packer und/oder Palettierer transportieren kann. Das Transportsystem kann Förderbänder und/oder Greifer umfassen.

### Kurze Figurenbeschreibung

Die beigefügten Figuren stellen beispielhaft zum besseren Verständnis und zur Veranschaulichung Aspekte und/oder Ausführungsbeispiele der Erfindung dar. Es zeigt:
Figur 1 einen Behälter mit zwei horizontal umlaufenden Zugbändern,
Figur 2 einen Behälter mit zwei schräg verlaufenden Zugbändern,
Figur 3 einen Behälter mit zwei schräg verlaufenden Stützen, einem horizontal umlaufenden Zugband und einer horizontal umlaufenden Stütze und
Figur 4 einen Behälter, wobei der Boden mehrere Segmente umfasst.

### Ausführliche Figurenbeschreibung

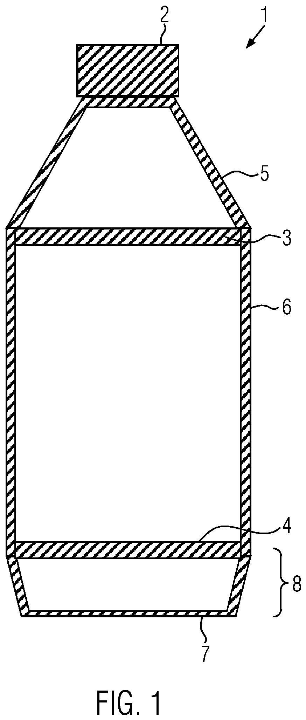

Die Figur 1 zeigt einen Behälter 1 mit zwei horizontal umlaufenden Zugbändern 3, 4. Der Behälter 1 umfasst einen Schulterbereich 5, ein Seitenteil 6, einen Bodenbereich 8 mit einem Boden 7 und ein nicht sichtbares Gewinde, das von einem Deckel 2 überdeckt wird. Das eine horizontal umlaufende Zugband 3 verbindet den Schulterbereich 5 und das Seitenteil 6 und das andere horizontal umlaufende Zugband 4 verbindet das Seitenteil 6 und den Bodenbereich 8. Dadurch können sie für eine Druckbeständigkeit des Behälters 1 beispielsweise bei Füllung mit einem kohlenstoffdioxidhaltigen Produkt dienen.

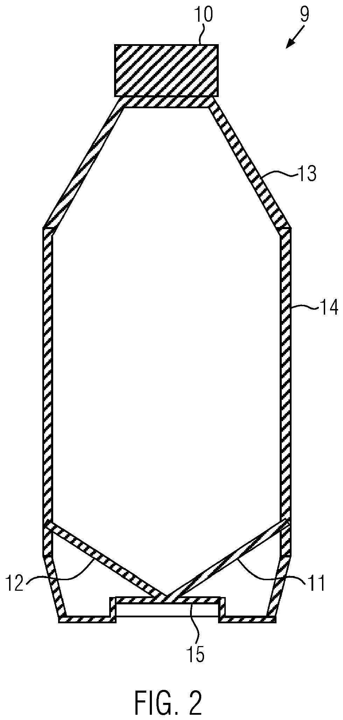

Die Figur 2 zeigt einen Behälter 9 mit zwei schräg verlaufenden Zugbändern 11, 12. Der Behälter 9 umfasst einen Schulterbereich 13, ein Seitenteil 14, einen Boden 15 und ein nicht sichtbares Gewinde, das von einem Deckel 10 überdeckt wird. Die beiden schräg verlaufenden Zugbänder 11, 12 verbinden den Boden 15 und das Seitenteil 14. Durch die schräg verlaufenden Zugbänder 11, 12 kann ein nach Außenwölben des Bodens 15 verhindert werden, wenn beispielsweise der Behälters 9 eine Füllung mit einem kohlenstoffdioxidhaltigen Produkt aufweist.

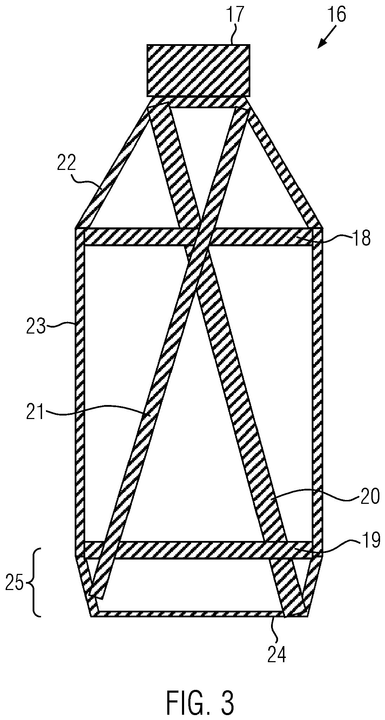

Die Figur 3 zeigt einen Behälter 16 mit zwei schräg verlaufenden Stützen 20, 21, einem horizontal umlaufenden Zugband 19 und einer horizontal umlaufenden Stütze 18. Der Behälter 16 umfasst einen Schulterbereich 22, ein Seitenteil 23, einen Bodenbereich 25 mit einem Boden 24 und ein nicht sichtbares Gewinde, das von einem Deckel 17 überdeckt wird.

Die beiden schräg verlaufenden Stützen 20, 21 verbinden den Bodenbereich 25 und den Schulterbereich 22. Dadurch kann die Standfestigkeit des Bodens 24 erhöht werden.

Das horizontal umlaufende Zugband 19 verbindet das Seitenteil 23 und den Bodenbereich 25. Dadurch kann eine Druckbeständigkeit des Behälters 16 beispielsweise bei Füllung mit einem kohlenstoffdioxidhaltigen Produkt erhöht werden.

Die horizontal umlaufende Stütze 18 verbindet den Schulterbereich 22 und das Seitenteil 23. die Stütze 18 kann für eine zusätzliche Stabilität beim Einwirken eines Staudrucks auf den Behälter 16 beim Transport auf einem Transporteur dienen.

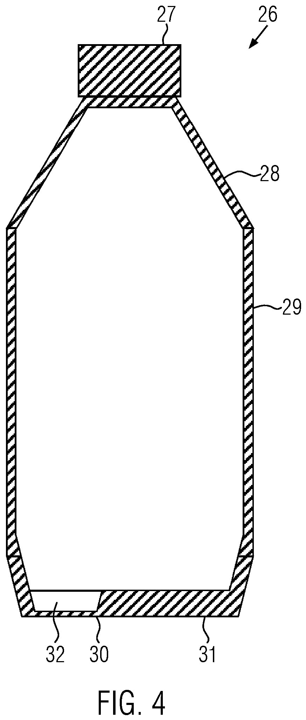

Die Figur 4 zeigt einen Behälter 26, wobei der Boden 30 mehrere Segmente 32 umfasst, die durch Trennwände 31 unterteilt sind. Eine Bodendicke des Segments 32 ist kleiner als eine Bodendicke einer Trennwand 31 der Segmente 32.

Der Behälter 26 umfasst einen Schulterbereich 28, ein Seitenteil 29, den Boden 30 und ein nicht sichtbares Gewinde, das von einem Deckel 27 überdeckt wird. Bei einem erhöhten Druck im Behälter 26, beispielsweise bei Füllung mit einem kohlenstoffdioxidhaltigen Produkt, kann das Segment 32 mehr ausbeulen und einen Standfuß bilden, von denen mehrere entlang des Umfangs vorgesehen sein können, beispielsweise fünf. Die Standfestigkeit kann erhöht werden.

Bei allen gezeigten Ausführungsformen ist es möglich, dass ein anderer Verschluss vorgesehen werden kann. Weiterhin ist die Anzahl der gezeigten Stützen und Zugbänder variierbar - so könnte beispielsweise ein, zwei, drei oder mehr weitere horizontale Zugbänder zwischen den beiden gezeigten Zugbändern vorgesehen sein.

Weiterhin können die Behälter alternativ oder zusätzlich vertikal verlaufende Zugbänder, die sich zumindest bereichsweise entlang der Außenkontur der Behälter erstrecken, umfassen. Von diesen Zugbändern können entlang des Umfangs zwei, drei, vier, fünf oder mehr Bänder vorgesehen sein.

Weiterhin wären anderen Behälterformen möglich, beispielsweise dosenförmige Behälter.

## Patentansprüche

1. Verfahren zum Herstellen eines Fasern umfassenden Behälters (1, 9, 16, 26) mittels eines gesteuerten Auftragskopfes, der Material, das die Fasern umfasst, an Behälterpositionen aufbringt.

2. Das Verfahren nach Anspruch 1, wobei das Material mittels des gesteuerten Auftragskopfs auf einer Innenwandung einer Form aufgebracht wird und ein Herstellen des Behälters (1, 9, 16, 26) durch Pressen oder Ausformen mittels eines Ballons in der Form erfolgt.

3. Das Verfahren nach Anspruch 1 oder 2, wobei ein Aufbringen des Materials mittels eines 3D-Drucker erfolgt, wobei beispielsweise für das Aufbringen ein schichtweiser Aufbau vorgesehen ist.

4. Das Verfahren nach einem der Ansprüche 1 bis 3, wobei eine Bewegung des gesteuerten Auftragskopfs mittels eines Mehrachsroboters erfolgt.

5. Das Verfahren nach einem der Ansprüche 1 bis 4, wobei mittels des gesteuerten Auftragskopfs das Material auf einen bereits zumindest teilweise hergestellten Behälter aufgebracht zum weiteren Herstellen eines Teilelements des Behälters (1, 9, 16, 26) und gleichzeitigem Verbinden des Teilelements mit dem bereits zumindest teilweise hergestellten Behälter (1, 9, 16, 26),
wobei beispielsweise das Teilelement ein Mundstück und/oder einen Griff und/oder ein Gewinde umfasst, wobei beispielsweise anschließend an das Herstellen des Gewindes ein Pressen des Gewindes erfolgt.

6. Das Verfahren nach einem der Ansprüche 1 bis 5, wobei mittels dem gesteuerten Auftragskopf mindestens ein weiteres, faserhaltiges Material an Behälterpositionen aufgebracht wird, wobei das mindestens eine weitere, faserhaltige Material verschieden von dem Material ist, das die Fasern umfasst.

7. Das Verfahren nach einem der Ansprüche 1 bis 6, wobei mittels des gesteuerten Auftragskopfs Identifikationsangaben und/oder Haltbarkeitsangaben als Embossing auf dem Behälter (1, 9, 16, 26) aufgebracht werden.

8. Das Verfahren nach einem der Ansprüche 1 bis 7, wobei innerhalb des Behälters mindestens eine Stütze (3, 4, 11, 12, 18, 19, 20, 21) vorgesehen wird, die beispielsweise zwei oder mehr Innenbereiche des Behälters (1, 9, 16, 26) verbindet.

9. Das Verfahren nach Anspruch 8, wobei die mindestens eine Stütze ein Zugband (3, 19) für einen Boden (7, 24) des Behälters (1, 16) und/oder mindestens ein horizontal umlaufendes Zugband und/oder mindestens ein schräg verlaufendes Zugband umfasst, wobei beispielsweise diese Zugbänder langfaseriges Material umfassen.

10. Das Verfahren nach einem der Ansprüche 1 bis 9, wobei ein Boden (30) des Behälters (26) mehrere Segmente (32) umfasst, beispielsweise Kreissegmente, wobei eine Bodendicke des Segments (32) kleiner ist als eine Bodendicke einer Trennwand (31) der Segmente (32).

11. Das Verfahren nach einem der Ansprüche 1 bis 10, wobei ein Innenbereich des Behälters mittels des gesteuerten Auftragskopfs strömungsoptimiert ausgebildet wird.

12. Das Verfahren nach einem der Ansprüche 1 bis 11, wobei mittels eines 3D-Druckers eine Beschichtung auf eine innere Oberfläche und/oder äußere Oberfläche des hergestellten Behälters aufgebracht wird, wobei beispielsweise die Beschichtung eine Nanoschicht umfasst.

13. Das Verfahren nach einem der Ansprüche 1 bis 12, wobei eine Beschichtung auf eine äußere Oberfläche des hergestellten Behälters durch Eintauchen in ein Beschichtungsbad erfolgt, wobei beispielsweise die Beschichtung ein Harz umfasst.

14. Vorrichtung, beispielsweise zum Ausführen des Verfahrens nach einem der Ansprüche 1 bis 13, wobei die Vorrichtung mindestens einen gesteuerten Auftragskopf umfasst zum Aufbringen von Material, das die Fasern umfasst, an Behälterpositionen.

15. Die Vorrichtung nach Anspruch 14, weiter umfassend einen 3D-Drucker und/oder einen Mehrachsroboter für ein Bewegen des mindestens einen gesteuerten Auftragskopfs, wobei beispielsweise der Mehrachsroboter einen hydraulischen, pneumatischen, elektromechanischen oder hydropneumatischen Aktor umfasst.
